# EUROPÄISCHE PATENTSCHRIFT

(11) **EP 2 895 406 B1**
(45) Veröffentlichungstag und Bekanntmachung des Hinweises auf die Patenterteilung: **26.10.2016**
(21) Anmeldenummer: 13794790.9
(22) Anmeldetag: 11.09.2013
(51) Int. Cl.: B65G 15/48, C23C 18/00

(54) **VERFAHREN ZUR HERSTELLUNG EINES TRANSPORT- ODER PROZESSBAND**
METHOD TO MANUFACTURE A TRANSPORT BELT OR PROCESSING BELT
PROCÉDÉ DE FABRICATION D'UNE BANDE DE TRANSPORT OU DE PROCESS

(30) Priorität: 12.09.2012 AT 9952012
(43) Veröffentlichungstag der Anmeldung: 22.07.2015
(73) Patentinhaber: Berndorf Band GmbH, 2560 Berndorf (AT)
(72) Erfinder: SIMMEL, Johannes Günther, A-7201 Neudörfl (AT)
(74) Vertreter: Burger, Hannes
(86) Internationale Anmeldenummer: PCT/AT2013/050180
(87) Internationale Veröffentlichungsnummer: WO 2014/040107

(56) Entgegenhaltungen:
- EP-A1- 0 894 746
- EP-A1- 1 164 094
- EP-A1- 1 574 457
- WO-A1-01/28896
- DE-U1-202005 004 468

## Beschreibung

Die Erfindung betrifft Verfahren zur Herstellung eines Transport- oder Prozessbandes, welches als Endlosband mit einem Bandkörper aus einem Metallblech ausgebildet ist, wobei der Bandkörper eine Bandaußenseite und eine Bandinnenseite aufweist, die durch seitliche Kanten miteinander verbunden sind.

Die EP 1 574 457 A1 offenbart ein solches gattungsgemäßes Verfahren.

Bei Transport- oder Prozessbändern, wie sie beispielsweise beim Filmgießen, in der Lebensmittelproduktion oder bei der Herstellung von pillen- oder pastillenförmigen Produkten verwendet werden, kann es erforderlich sein, die Bänder zu beschichten, um gewünschte Oberflächeneigenschaften zu erzielen. Beispielsweise werden bei Backbändern die mit Lebensmitteln in Berührung kommenden Oberflächen üblicherweise mit einer Teflon-beschichtung versehen oder mit einem Trennmittel besprüht. Eine Beschichtung mit Teflon hat jedoch unter anderem den Nachteil, dass es sehr schwierig ist, Beschädigungen der Beschichtung auszubessern.

Aus der DE202004010837U1 ist ein Transportband bekannt geworden, welches eine thermoplastische Beschichtung aus einem hochmolekularen Silikon aufweist. Nachteilig an dem bekannten Verfahren ist vor allem, dass es relativ aufwendig und aufgrund der Verwendung von Silikonsonderpolymeren mit hohen Kosten verbunden ist.

Es ist daher eine Aufgabe der Erfindung, die oben genannten Nachteile des Stands der Technik zu überwinden.

Diese Aufgabe wird durch ein Verfahren nach Anspruch 1 gelöst.

Das erfindungsgemäße Verfahren hat den Vorteil, dass sich wenn das Band erst nach dem Verbinden zu einem ringförmigen Endlosband lackiert wird, ein besonders einfacher Herstellungsprozess ergibt. Das Band lässt sich hierbei durch Verschweißen oder Löten, beispielsweise Weichlöten, zu einem Endlosband verbinden, wobei keine Rücksicht auf die Lackschicht genommen werden muss. Zum Verschweißen des Bandes kommen grundsätzlich alle Schweißarten, wie Laserschweißen, WIG Schweißen, MIG/MAG Schweißen, Ultraschall- oder Reibrührschweißen etc., zum Einsatz kommen. Anstelle von Verschweißen als Verbindungsarten können auch Klebetechniken verwendet werden, welche sich besonders dazu eignen, den Lack nicht zu beschädigen, wenn das Band vor dem Verbinden zu einem Endlosband bereits lackiert ist. Es ist grundsätzlich jeder Kleber bzw. jedes Klebeverfahren, welcher bzw. welches für die Verbindung von Metall geeignet ist einsetzbar.

Es ist jedoch auch möglich, das Band vor dem Verbinden zu einem ringförmigen Endlosband zu lackieren, wobei jedoch bei der Verbindung der stirnseitigen Enden des Bandkörpers zu dem Endlosband darauf Bedacht genommen werden muss, die Lackschicht nicht zu beschädigen. Hierbei ist es von Vorteil, wenn die stirnseitigen Enden des Bandkörpers miteinander verklebt werden. Das Problem, den Lack eines bereits lackierten Bandes nicht zu beschädigen, lässt sich allerdings dadurch umgehen, dass jeweils in einem Endbereich der miteinander zu verbindenden Enden des Bandkörpers ein an die Verbindungsstelle angrenzender Abschnitt unlackiert gelassen wird. Nach Verbinden der Endbereiche können dann die unlackierten Abschnitte um die Verbindungsstelle und die Verbindungstelle selbst lackiert werden.

Zum Auftragen des Lacks können grundsätzlich alle bekannten Arten des Lackauftrags verwendet werden, wie Sprühen, Walzen etc. Auch ist es möglich, dass der Lack in Pulverform vorliegt und galvanisch aufgetragen wird.

Gemäß einer besonders vorteilhaften Variante der Erfindung kann es vorgesehen sein, dass ein Lackieren des Endlosbandes durch einen tropfenförmigen Auftrag von Lack mit zumindest einem digitalgesteuerten Druckkopf erfolgt. Bei dieser Ausführungsform der Erfindung wird zum Lackieren ein digitaler Drucker verwendet. Hierdurch lässt sich ein beliebiges Muster des Lackauftrages erzeugen. Weiters können die Form des Lackauftrages und der Bereich, in dem dieser erfolgen soll, vordefiniert werden. So lässt sich beispielsweise der oben erwähnte inselförmige Lackauftrag auf einfach Weise mit einem digital gesteuerten Druckkopf, der sich beispielsweise relativ zum Band bewegen kann oder vice versa, bewerkstelligen.

Weiters kann nach einem Auftragen von Lack auf den Bandkörper in den aufgetragenen Lack eine dreidimensionale Struktur eingebracht werden. Die Verwendung von Lack eignet sich sehr gut zur Realisierung einer strukturierten Oberfläche, da sich in den Lack vor seinem Aushärten sehr einfach Strukturen einbringen lassen, beispielsweise mit sogenannten Pressblechen oder Pressbändern, welche strukturgebende Oberflächenbereiche aufweisen. Auch nach dem Aushärten lässt sich der Lack, beispielsweise durch Schleifen, mechanische Bearbeitung, Bestrahlung, etc. in Vergleich zu einer metallischen Oberfläche leicht strukturieren.

Weiters wird ein nicht beanspruchtes Band offenbart, wobei mindestens die Außenseite des Bandes, also jene Seite, welche mit einem zu transportierenden Material oder Produkt hauptsächlich in Kontakt kommt, beschichtet ist. Selbstverständlich ist es auch möglich, dass auch die Bandinnenseite und/oder die Seitenkanten des Bandes lackiert sind. Durch die Lackierung lässt sich auf einfache Art eine sehr effiziente Schutzschicht auf der Bandoberfläche realisieren, die sich auch sehr einfach und schnell ausbessern lässt. Darüber hinaus können die Oberflächeneigenschaften des Bandes auf einfache Weise an vorgegebene Anforderungen angepasst werden. So können durch die Verwendung von Lacken, die eine sehr gute Temperaturbeständigkeit auch bei hohen Temperaturen, beispielsweise zwischen 250° und 300°, und gute Antihafteigenschaften aufweisen, Backbänder bzw. Transportbänder für die Lebensmittelindustrie realisiert werden. Auch können dem Band dreidimensionale Strukturen, beispielsweise mittels Pressplatten, Pressblechen, Pressbändern, etc., eingeprägt werden.

Gemäß einer nich beanspruchten Variante ist es vorgesehen, dass die Bandaußenseite mit einem hydrophoben Lack lackiert ist. Diese Ausführungsform zeichnet sich vor allem durch eine geringe Oberflächenhaftung aus. Unter einem hydrophoben Lack wird hier ein Lack verstanden, auf dessen Oberfläche nach dem Aushärten ein Wassertropfen oder ein Tropfen einer Flüssigkeit mit einer ähnlichen Viskosität wie Wasser einen Kontaktwinkel von mindestens 70° aufweist.

Gemäß einer weiteren nicht beanspruchten Ausführungsform der Erfindung, kann es vorgesehen sein, dass die Bandaußenseite von einer Lackschicht bedeckt ist, die voneinander durch nicht lackierte Bereiche oder Bereiche mit einer geringeren Schichtdicke getrennte und inselförmig ausgebildete lackierte Zonen aufweist. Die Bandoberfläche weist somit eine dreidimensionale Struktur auf, die durch noppenförmige Erhöhungen und dazwischen liegende Vertiefungen geprägt ist. Auf diese Weise lassen sich ebenfalls gute Antihafteigenschaften erzielen. In diesem Zusammenhang hat es sich als besonders günstig herausgestellt, wenn die inselförmigen Zonen eine Höhe von 1µ bis 50µ aufweisen und 1µ bis 50 µ voneinander entfernt sind.

Die Antihafteigenschaften der Bandoberfläche lassen sich dadurch weiter verbessern, dass eine auf die Bandaußenseite aufgebrachte Lackschicht von ihrer Oberfläche abstehende Strukturen mit einer Höhe von 1 - 900 nm, insbesondere 1 - 100 nm, aufweist, die in einem Abstand von 1 - 900 nm, insbesondere 1 - 100 nm voneinander angeordnet sind.

Nach einer besonders gut für den Einsatz im Lebensmittelbereich geeignete Variante, kann es vorgesehen sein, dass die Bandaußenseite mit einem Silikonpolyesterharz als Bindemittel aufweisenden Lack lackiert ist. Durch die Verwendung von Silikonpolyesterharz lässt sich auch eine besonders gute Hitzebeständigkeit des Lacks erzielen. Besonders bevorzugt ist es hierbei, wenn der Anteil des Silikonpolyesterharzes bei mindestens 10 Gewichtsprozent, insbesondere zwischen 20 und 40 Gewichtsprozent oder über 40 Gewichtsprozent, beträgt. Der Lack kann hierbei als Flüssigkeit vorliegen. Als Lösemittel können beispielsweise Methoxypropylacetat und Isobutanol in einem bevorzugten Verhältnis von 20:1 verwendet werden.

Das Transport- oder Prozessband eignet sich insbesondere für eine nicht beanspruchte Verwendung als Band zum Filmgießen oder als Band zur Herstellung von pillen- bzw. pastillenförmigen Produkten, wie sie beispielsweise bei Entschwefelungsprozessen, wie der Entschwefelung von Mineralölen, anfallen. Es sei erwähnt, dass solche Bänder nicht auf die soeben erwähnten Verwendungen eingeschränkt sind.

Die Erfindung samt weiteren Vorteilen wird im Folgenden anhand einiger nicht einschränkender Ausführungsbeispiele näher erläutert, welche in den Zeichnungen dargestellt sind.

In diesen zeigen jeweils in stark schematisch vereinfachter Darstellung:
- Fig. 1: eine perspektivische Ansicht eines durch das erfindungsgemäße Verfahren hergestellten Endlosbandes;
- Fig. 2: einen Querschnitt durch das Endlosband aus Fig. 1 entlang der Linie II-II;
- Fig. 3: einen Tropfen auf einer Oberfläche des Endlosbandes aus Fig. 1;
- Fig. 4: den Querschnitt aus Fig. 2 im näheren Detail;
- Fig. 5: einen Querschnitt durch ein Endlosband gemäß einer weiteren Variante.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

An dieser Stelle sei auch darauf hingewiesen, dass die Figuren übergreifend beschrieben sind.

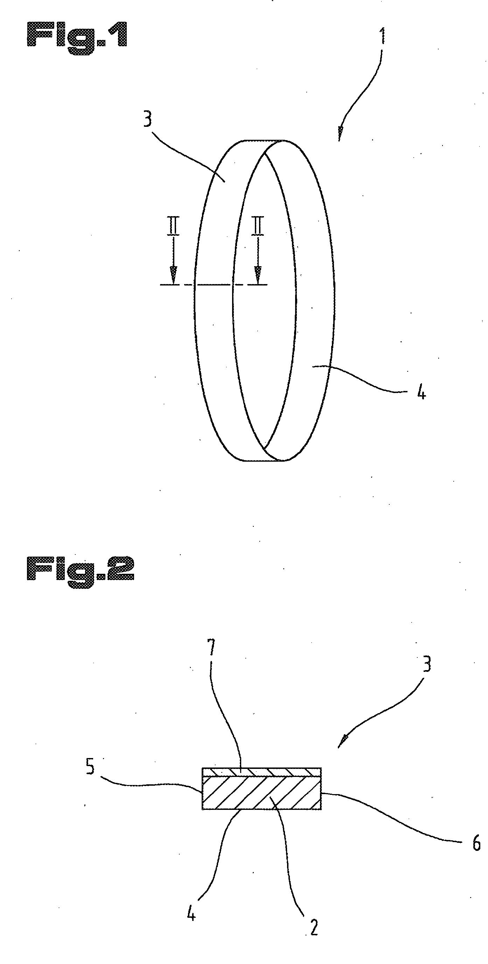

Gemäß Fig. 1 und 2 weist ein durch das erfindungsgemäße Verfahren hergestelltes Endlosband 1 einen Bandkörper 2 eine Bandaußenseite 3 und eine Bandinnenseite 4 auf. Der Bandkörper 8 ist aus einem Metallblech gebildet. Zwischen der Bandaußenseite 3 und der Bandinnenseite 4 weist das Endlosband 1 seitliche Kanten 5, 6 auf. Die Bandaußenseite 3 ist lackiert bzw. weist eine Lackschicht 7 auf.

Bevorzugter Weise kann die Lackschicht 7 eine hydrophobe Oberfläche bilden oder eine sehr gute Temperaturbeständigkeit aufweisen.

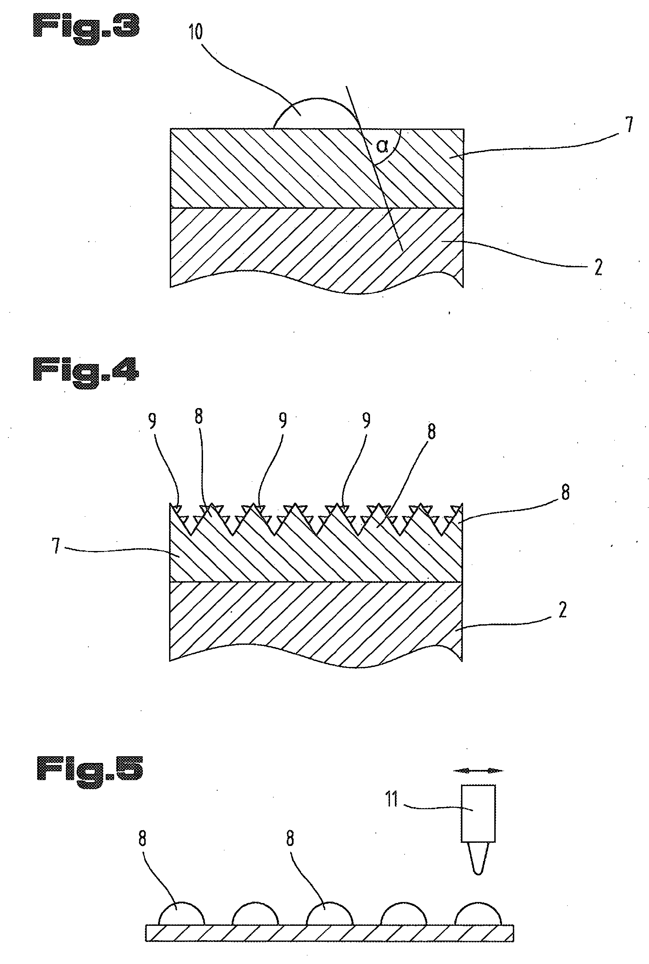

Unter dem Begriff "hydrophobe Oberfläche" wird in dem vorliegenden Zusammenhang verstanden, dass der Kontaktwinkel zwischen einem Wassertropfen oder einem Tropfen einer Flüssigkeit mit einer ähnlichen Viskosität wie Wasser und der Bandaußenseite 3 bei mindestens 70° liegt. Aus Fig. 3 ist der Kontaktwinkel α ersichtlich. Unter dem Begriff "hydrophob" sind in dem vorliegenden Zusammenhang somit sämtliche Kontaktwinkel zwischen einem Tropfen und der Lackschicht 7 des Endlosbandes 1 größer als 70° umfasst.

Wie aus Fig. 4 ersichtlich ist, kann die Bandaußenseite 3 von einer Lackschicht 7 bedeckt sein, die voneinander durch nicht lackierte Bereiche oder Bereiche mit einer geringeren Schichtdicke getrennte und inselförmig ausgebildete lackierte Zonen 8 aufweist. Die inselförmigen Zonen 8 können beispielsweise als 1µ bis 50µ hohe und 1µ bis 50 µ voneinander entfernte Erhebungen ausgebildet sein. Die obige Entfernungsangabe bezieht sich auf den kürzesten Abstand zwischen unmittelbar zueinander benachbarten inselförmiger Zonen 8. Die Zonen 8 können freistehende Erhebungen, wie beispielsweise Noppen, bilden.

Die Durchmesser der Zonen 8 können an ihren freien Endbereichen kleiner sein als die Höhen der jeweiligen Zonen 8. Unter dem Begriff freie Endbereiche der Zonen 8 werden hierbei die von dem Endlosband 1 fortweisenden Enden der Zonen 8 verstanden. Die Durchmesser der freien Enden der Zonen 8 können bevorzugt in einem Bereich zwischen 1nm und 50µ liegen. An dieser Stelle sei darauf hingewiesen, dass die lackierten Zonen 8 je nach Einsatzzweck auch größer ausgebildet sein können. Die oben angegebenen Werte haben sich jedoch in Zusammenhang mit der Schaffung einer hydrophoben Oberfläche als besonders vorteilhaft herausgestellt.

Wie aus Fig. 4 weiter ersichtlich ist, kann auf die Zonen 8 der Lackschicht 7 eine Nanostruktur aufgebracht sein. Die Nanostruktur kann Erhebungen, welche im Folgenden Nänoerhebungen 9 genannt werden, aufweisen. Die Nanoerhebungen 9 können in einem Bereich zwischen 1 - 900 nm liegen, bevorzugt jedoch zwischen 1 - 100 nm. Darüber hinaus können die Nanoerhebungen 9 in einem Abstand von 1 - 900 nm, bevorzugt jedoch in einem Bereich von 1 - 100 nm voneinander angeordnet sein. Auch für die Nanoerhebungen 9 gilt, dass sich die Entfernungsangabe auf den kürzesten Abstand zwischen zwei unmittelbar benachbarten Nanoerhebungen 9 bezieht. Bei den Nanoerhebungen 9 kann es sich um freistehende Strukturen, wie beispielsweise Noppen, handeln.

Die Durchmesser der Nanoerhebungen 9 können an ihren freien Endbereichen ebenfalls kleiner sein als die Höhen der jeweiligen Nanoerhebungen 9. Unter dem Begriff freie Endbereiche der Nanoerhebungen 9 werden hierbei die von dem Endlosband 1 fortweisenden Enden der Nanoerhebungen 9 verstanden.

Zum Erzeugen der Nanostrukturen 9 kann der zum Lackieren der Bandaußenseite 3 verwendete Lack beispielsweise auf anorganischen Siliziumverbindungen basieren und mittels eines digital gesteuerten Druckers auf die Bandoberfläche aufgetragen werden. Der Lack kann hierbei SiO2 Nanopartikel enthalten die zunächst ungeordnet in einer flüssigen Lackschicht, beispielsweise einem Klarlack, schwimmen. Durch Trocknen, beispielsweise bei 160 Grad Celsius, können sich die Nanopartikel an der Oberfläche zu einer harten Lackschicht vernetzen und die Nanostrukturen 9 ausbilden. An dieser Stelle sei darauf hingewiesen, dass es zur Schaffung der Nanostrukturen 9 nicht unbedingt erforderlich ist, dass die Lackschicht 7 inselförmige Zonen 8 aufweist, so könnten die Nanostrukturen 9 auch direkt aus der Oberfläche einer großflächig geschlossenen Lackschicht 7 herausragen.

Das Endlosband 1 eignet sich unter anderem zur Verwendung als Kühlband bei der Herstellung von pastillenförmigen oder folienartigen Strukturen aus einem fließfähigen Ausgangsmaterial, welches auf das Kühlband aufgebracht wird. Insbesondere eignet sich das Endlosband zur Verwendung als Kühlband bei der Herstellung von Schwefelpastillen. In dem zuletzt genannten Fall handelt es sich bei Endlosband 1 somit um ein Kühlband für die Herstellung von Schwefelpastillen.

Durch die Verwendung eines Lacks, welcher ein Silikonpolyesterharz als Bindemittel aufweist, lässt sich ein Band schaffen, welches sich sehr gut für den Einsatz als Prozess- und Transportband für die Herstellung von Lebensmittel, beispielsweise für die Herstellung von Backwaren, verwenden lässt.

An dieser Stelle sei auch darauf hingewiesen, dass die Bandaußenseite 3 des Endlosbandes 1 nicht durchgehend eine Lackschicht 7 aufweisen muss. So ist es auch denkbar, dass beispielsweise in Bandlängsrichtung des Endlosbandes 1 voneinander beabstandete lackierte Zonen 8 vorhanden sind. Die lackierten Zonen 8 sind hierbei durch nicht lackierte Zonen der Bandaußenseite 3 getrennt, wie dies in Fig. 5 dargestellt ist.

Im Folgenden soll auf erfindungsgemäße Verfahren zur Herstellung des Endlosbandes 1 eingegangen werden.

Zur Herstellung des Endlosbandes 1 wird in die Bandaußenseite 3 eine Lackschicht 7 aufgebracht. Dies kann vor oder nach einer Verbindung freier Enden des Bandes zu dem Endlosband 1 erfolgen. Das Endlosband 1 kann beispielswiese durch Verschweißen der freien Enden eines Bandes in seine in Fig. 1 dargestellte ringförmige Struktur gebracht werden.

Die Lackschicht 7 kann direkt auf den metallischen Bandkörper 2 aufgetragen werden. Natürlich ist es auch möglich, den Bandkörper 2 vor dem Lackieren mit einer Grundierung zu versehen oder den Bandkörper 2 mechanisch oder chemisch vorzubehandeln. Auch kann die Lackschicht 7 nach dem Auftragen mechanisch oder chemisch nachbehandelt werden

Die Vorbehandlung des Metallbandes oder die Nachbehandlung der Lackschicht 7 kann beispielsweise durch Beschießen der Bandaußenseite 3 bzw. der Lackschicht 7 mit einem Strom aus Partikeln erhalten werden. So kann die Bandaußenseite 3 oder die Lackschicht 7 beispielweise in einem ersten Schritt mit Partikeln bestrahlt werden, die einen Durchmesser von mindestens 10 µ, insbesondere jedoch eine Korngröße zwischen 10 µ bis 2000 µ aufweisen, wobei die Bandaußenseite 3 oder die Lackschicht 7 in einem zweiten Schritt mit Partikeln bestrahlt wird, die eine Korngröße aufweisen, die kleiner ist als die der in dem ersten Schritt verwendeten Partikel. Die hier verwendeten Begriffe "erster Schritt" und "zweiter Schritt" schließen das Vorhandensein von zwischen diesen Schritten stattfindenden weiteren Schritten nicht aus, sondern bedeuten lediglich, dass der erste Schritt zeitlich vor dem zweiten Schritt zu erfolgen hat.

Auch kann durch die Verwendung von Elementen zur Strukturgebung, beispielsweise Pressblechen oder Pressbändern, eine gewünschte Struktur in den Lack eingebracht werden.

Alternativ oder zusätzlich zu einer mechanischen Behandlung können das Metallband oder die Lackschicht 7 auch einer chemischen Behandlung unterzogen werden. So kann beispielsweise der Bandkörper 3 durch Verätzen für das Lackieren vorbereitet werden.

Durch Hinzufügen von Farbpartikeln bzw. Farbpigmenten zum Lack lassen sich auch das Reflexions- und Absorptionsverhalten des Bandes auf einfache Weise beeinflussen, sodass die für einen bestimmten Einsatzzweck gewünschten Eigenschaften gezielt optimiert werden können.

Zum Auftragen der Lackschicht 7 können grundsätzlich alle herkömmlichen Lackiermethoden eingesetzt werden. Als besonders günstig hat es sich jedoch herausgestellt, wenn die Lackschicht 7 mittels eines digital gesteuerten Druckkopfs 11 oder mehrerer derartiger Druckköpfe auf die Oberfläche aufgetragen wird. Der Druckkopf 11 kann beispielsweise entlang der Bandbreite verfahren werden und/oder aber auch in Längsrichtung des Bandkörpers 3. Als vorteilhaft hat es sich herausgestellt, wenn der Bandkörper 3 während des Lackierens in Längsriehctung des Bandkörpers 3 unter dem Druckkopf 11 hindurch bewegt wird und sich der Druckkopf 11 entlang der Bandbreite bewegt. Auch Sprühverfahren und Vorhangbeschichtungsverfahren zum Auftragen des Lacks haben sich in der Praxis bewährt.

Der Ordnung halber sei darauf hingewiesen, dass zum besseren Verständnis des Aufbaus des Endlosbandes dieses bzw. dessen Bestandteile teilweise unmaßstäblich und/oder vergrößert und/oder verkleinert dargestellt wurden.

Die Ausführungsbeispiele zeigen mögliche Ausführungsvarianten des erfindungsgemäßen Verfahrens zur Herstellung eines Endlosbandes, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, sowie alle weiteren nicht beschriebenen und dargestellten Ausführungsformen, die unter den Wortlaut der unabhängigen Ansprüche fallen vom Schutzumfang mitumfasst.

### Bezugszeichenaufstellung

- 1: Endlosband
- 2: Bandkörper
- 3: Bandaußenseite
- 4: Bandinnenseite
- 5: Seitliche Kante

- 6: Seitliche Kante
- 7: Hydrophobe Oberfläche
- 8: Mikrostruktur
- 9: Nanostruktur
- 10: Tropfen

- 11: Druckkopf
- A: Kontaktwinkel

## Patentansprüche

1. Verfahren zur Herstellung eines Transport- oder Prozessbandes welches als Endlosband (1) mit einem Bandkörper (2) aus einem Metallblech ausgebildet ist, wobei der Bandkörper (2) eine Bandaußenseite (3) ünd eine Bandinnenseite (4) aufweist, die durch seitliche Kanten (5, 6) miteinander verbunden sind, , **dadurch gekennzeichnet, dass** in einem Schritt, welcher einem Verbinden stirnseitiger Enden eines aus dem Metallblech gebildeten Bandkörpers (2) zu dem Endlosband vorangeht oder nachfolgt, die Bandaußenseite (3) des Bandkörpers (2) zumindest abschnittsweise lackiert wird.

2. Verfahren nach Anspruch 1, **dadurch gekennzeichnet, dass** ein Lackieren der Bandaußenseite (3) durch einen tropfenförmigen Auftrag von Lack mit einem digitalgesteuerten Druckkopf (11) erfolgt.

3. Verfahren nach Anspruch 1 oder 2, **dadurch gekennzeichnet, dass** nach einem Auftragen von Lack auf den Bandkörper (2) in den aufgetragenen Lack eine dreidimensionale Struktur eingebracht wird.

## Claims

1. A method to manufacture a transport belt or processing belt which is formed as a continuous belt (1) having a belt body (2) made of a metal sheet, wherein the belt body (2) has an outer side of the belt (3) and an inner side of the belt (4) which are connected to one another by lateral edges (5, 6), **characterized in that** in a step, which proceeds or succeeds connecting of frontal ends of a belt body (2) made of a metal sheet so as to form the continuous belt, the outer side of the belt (3) of the belt body (2) is lacquered at least in certain sections.

2. The method according to claim 1, **characterized in that** lacquering the outer side of the belt (3) is carried out by applying lacquer in the form of drops by means of a digitally controlled print head (11).

3. The method according to claim 1 or 2, **characterized in that** after applying lacquer onto the belt body (2), a three-dimensional structure is incorporated in the applied lacquer.

## Revendications

1. Procédé de fabrication d'une bande de transport ou de traitement (1) conçue sous la forme d'une bande sans fin comportant un corps de bande (2) en tôle métallique, dans lequel le corps de bande (2) présente au moins une face externe de bande (3) et au moins une face interne de bande (4), qui sont reliées l'une à l'autre par des bords latéraux (5, 6), **caractérisé en ce que** lors d'une première étape, qui précède ou suit une liaison d'extrémités avant d'un corps de bande (2) réalisé en tôle métallique à la bande sans fin, la face externe (3) du corps de bande (2) va être peinte au moins par endroits.

2. Procédé selon la revendication 1, **caractérisé en ce qu'**une mise en peinture de la face externe de bande (3) est réalisée grâce à une application en forme de gouttelettes de peinture à l'aide d'une tête d'impression à commande numérique (11).

3. Procédé selon la revendication 1 ou 2, **caractérisé en ce qu'**après l'application de peinture sur le corps de bande (2), une structure en trois dimensions est introduite dans la peinture appliquée.
